Europäisches Patentamt

European Patent Office

Office européen des brevets

(19)

(11) EP 0 807 806 A2

(12) **EUROPÄISCHE PATENTANMELDUNG**

(43) Veröffentlichungstag:
19.11.1997 Patentblatt 1997/47

(51) Int. Cl.$^6$: **G01J 1/44**, G08B 13/191

(21) Anmeldenummer: 97106905.9

(22) Anmeldetag: 25.04.1997

(84) Benannte Vertragsstaaten:
**DE FR GB IT NL**

(30) Priorität: **14.05.1996 DE 19619459**

(71) Anmelder:
**Heimann Optoelectronics GmbH
D-65199 Wiesbaden (DE)**

(72) Erfinder:
**Knaup, Gerhard, Dipl.-Ing.
64683 Einhausen (DE)**

(74) Vertreter:
**Beetz & Partner
Patentanwälte
Steinsdorfstrasse 10
80538 München (DE)**

(54) **Schaltung zur Erfassung elektromagnetischer Strahlung**

(57)     Angegeben wird eine Schaltung zur Erfassung elektromagnetischer Strahlung mit einem oder mehreren Sensorelementen (2), die auf sie auftreffende elektromagnetische Strahlung in ein elektrisches Signal umwandeln, und einem Feldeffekttransistor (3), der das elektrische Signal des Sensorelements (2) empfängt, wobei der Feldeffekttransistor (3) über eine ohmsche bzw. induktive Impedanz (6) mit der Versorgungsspannung verbunden ist.

Fig. 2

## Beschreibung

Die vorliegende Erfindung bezieht sich auf eine Schaltung zur Erfassung elektromagnetischer Strahlung gemäß dem Oberbegriff des Anspruchs 1. Eine solche Schaltung ist bei der Anmelderin in Benutzung.

Die Schaltung dient der Aufbereitung und Verbesserung von Signalen von Sensoren, die elektromagnetische Strahlungen erfassen sollen. Insbesondere soll Wärmestrahlung bzw. Infrarotstrahlung erfaßt werden. Ein Einsatzgebiet ist beispielsweise das Feld der Bewegungsmelder. Diese Bewegungsmesser erfassen beispielsweise Personen anhand der von ihnen abgegebenen Wärmestrahlung und geben auf die Erfassung einer Person hin ein Signal aus, das in gewünschter Weise weiterverarbeitet werden kann. Beispielsweise kann ein Türöffner betätigt oder ein Alarm ausgelöst werden. Das zu erfassende Nutzsignal, die Infrarotstrahlung der zu erfassenden Person, ändert sich dabei i.A. niederfrequent. Der maßgebliche Bereich ist derjenige um etwa 1 Hz herum. Die Frequenz des Nutzsignals ergibt sich aus der Geschwindigkeit, mit der die Infrarotquelle an den Sensorelementen vorübergeht.

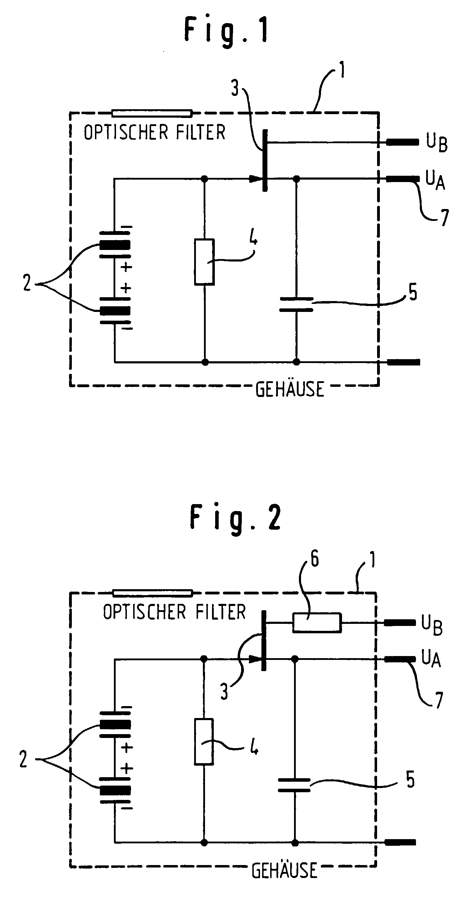

Eine bekannte Schaltung 1 hat dabei etwa den in Fig. 1 gezeigten Aufbau: Als eigentliches Sensorelement dient ein kapazitiv wirkender Aufnehmer, insbesondere eine pyroelektrische Zelle 2, die entsprechend der Änderung der Intensität der auf ihr eintreffenden Infrarotstrahlung Ladungen erzeugt und nach Art eines Kondensators speichert. Die eine Klemme des Sensorelements 2 ist gegen ein festes Bezugspotential geschaltet, beispielsweise Masse. Die andere Klemme liefert als Ausgangssignal eine Spannung. Da der Ausgang außerordentlich hochohmig ist, wird ein Impedanzwandler nachgeschaltet, damit die nachfolgende Auswerteschaltung einen hinreichend niedrigen Innenwiderstand der Schaltung 1 sieht. Parallel zum Sensorelement 2 ist ein hochohmiger Widerstand 4 geschaltet. Er sorgt dafür, daß sich die gebildeten Ladungen wieder abbauen können, sobald die die Ladung hervorrufende Wärmequelle verschwunden ist. Der Impedanzwandler ist üblicherweise ein Feldeffekttransistor 3. Sein einer Anschluß ist mit der Versorgungsspannung $U_B$ verbunden, während sein anderer Anschluß das für die Weiterverarbeitung geeignete Nutzsignal $U_A$ liefert. Bei einem n-Kanal-Sperrschicht-FET 3 liegt das Sensorelement 2 zwischen Masse und Gate, Drain liegt an der Batteriespannung $U_B$ und Source liefert das Ausgangssignal $U_A$.

Da das Ausgangssignal der Sensorelemente 2 insofern sehr schwach ist, als die Sensorelemente 2 einen außerordentlich hohen Innenwiderstand haben (Größenordnung 100 GΩ), ist die gesamte Schaltung außerordentlich anfällig gegenüber elektrischen Störungen. Dabei verursachen hauptsächlich hochfrequente elektrische Störungen Probleme. Unter Hochfrequenz werden hier vorzugsweise Frequenzen im Bereich von MHz und GHz verstanden. Besonders störend ist dabei die über die Versorgungsleitungen eingestreute Hochfrequenz. Es machen sich aber auch direkt empfangene Hochfrequenzstörungen bemerkbar, beispielsweise verursacht durch Funktelefone oder ähnliches. Die Hochfrequenzstörungen führen zu Fehlerfassungen und damit Fehlschaltungen der Schaltung 1. Um solche Fehlerfassungen zu verringern, wurde im Hause Heimann ein Kondensator 5 verwendet, der zwischen dem Nutzsignalausgang 7 und Masse geschaltet wurde. Nach Art eines Tiefpasses schloß er hohe Ausgangsfrequenzen kurz, so daß diese am Ausgang der Schaltung nur noch abgeschwächt anlagen. Die Häufigkeit von Fehlerfassungen konnte damit verringert werden.

Aufgabe der Erfindung ist es, eine Schaltung zur Erfassung elektromagnetischer Strahlung anzugeben, mit der die durch hochfrequente Störungen verursachten Fehlerfassungen weiter minimiert werden können.

Diese Aufgabe wird anspruchsgemäß gelöst.

Nachfolgend wird die Erfindung bezugnehmend auf die beiliegenden Zeichnungen genauer beschrieben. Es zeigen:

Fig. 1     eine bisher verwendete Schaltung, und

Fig. 2     eine erfindungsgemäße Ausführungsform.

In Fig. 2 sind zwei Sensorelemente 2 gegenpolig miteinander in Serie geschaltet. Der Sinn dieser Maßnahme wird weiter unten erläutert. Parallel zur Serienschaltung der Sensorelemente 2 ist ein Entladewiderstand 4 vorgesehen, damit die auf Infrarotstrahlung hin erzeugten Ladungen wieder abfließen können. Die Sensorelemente 2 erzeugen beim Einfallen von Infrarotstrahlung Ladungen, die entsprechend der Formel $U = Q/C$ an den Klemmen der Parallelschaltung eine Spannung hervorrufen. Ist die die Sensorelemente 2 bestrahlende Infrarotstrahlung verschwunden, baut sich über den Widerstand 4 die entstandene Ladung ab. Damit verschwindet auch das Spannungssignal an den Klemmen der Parallelschaltung. Eine Klemme der Parallelschaltung ist mit dem Gate eines als Impedanzwandler dienenden Feldeffekttransistors 3 verbunden. Ein erster Leistungsanschluß des FET liefert das Ausgangssignal $U_A$ der erfindungsgemäßen Schaltung.

Um die Schaltung 1 unempfindlich gegen hochfrequente Störungen zu machen, ist zwischen den zweiten Leistungsanschluß des FET und die Versorgungsspannung $U_B$ eine rein ohmsche oder auch induktive Impedanz 6 geschaltet. Die eingestreute Hochfrequenzspannung wird über die Drain-Gate Koppelkapazität des Feldeffekttransistors von Drain auf Gate eingekoppelt. Die am Gate des Feldeffekttransistors am Hochohmwiderstand 4 und Sensorelement 2 erzeugte Spannung wird wie das Nutzsignal auf den Ausgang 7 übertragen. Durch die zusätzliche Drainimpedanz 6 teilt sich die eingestreute Hochfrequenzspannung auf den Drainwiderstand, die Drain- Gate Koppelkapazität und die Kapazität des Sensorelementes 2 auf. Da im Vergleich zur Drainimpedanz 6 die kapazitiven Blindwiderstände klein sind, fällt der Großteil der eingestreuten Hochfrequenzspannung an der zusätzlichen Drainimpedanz 6 ab.

Die Drainimpedanz kann einen ohmschen Widerstand, eine Induktivität oder eine Kombination aus beiden haben. Es teilt sich ggf. die eingestreute Hochfrequenzspannung auf den induktiven Blindwiderstand, die Drain- Gate Koppelkapazität und die Kapazität des Sensorelementes 2 auf. Da der induktive Blindwiderstand mit der Frequenz zunimmt, wird die Hochfrequenzunterdrückung im Vergleich zum rein ohmschen Drainwiderstand noch verbessert.

Zwischen Ausgangsklemme 7 und Masse kann ein (nicht dargestellter) Sourcewiderstand geschaltet sein, der die Funktion des als Impedanzwandler dienenden FET 3 unterstützt.

Es wurde auch erwogen, die Impedanz 6 zwischen den ersten Leistungsanschluß des FET 3 und die Ausgangsklemme 7 der Schaltung 1 zu schalten. Auch dann ergibt sich der Effekt der Unterdrückung hochfrequenter Störungen. Die Größe des Ausgangssignals wird dann jedoch in unerwünschter Weise beeinflußt, so daß die erstgenannte Möglichkeit zu wählen ist. Die Impedanz 6 würde in diesem Fall ggf. mit dem oben erwähnten Sourcewiderstand einen Spannungsteiler bilden, so daß das Ausgangssignal in dessen Mitte abgegriffen und damit abgeschwächt werden würde.

Figur 2 zeigt eine Ausführungsform, bei der zwei pyroelektrische Zellen 2 gegenpolig gegeneinandergeschaltet sind. Eine Optik ist dabei so ausgerichtet, daß die zwei Zellen Infrarotstrahlung aus unterschiedlichen Raumbereichen aufnehmen. Wenn beispielsweise eine Person erfaßt werden soll, kann die Ausrichtung der pyroelektrischen Zellen 2 bzw. der Optik so gewählt werden, daß zu erfassende Personen üblicherweise zunächst den von der ersten Zelle überwachten Bereich und dann den von der zweiten Zelle überwachten Bereich durchlaufen. Es ergibt sich dann ein deutliches Wechselsignal, weil die pyroelektrischen Zellen 2 nicht gleichzeitig, sondern räumlich und damit zeitlich nacheinander ansprechen. Wenn sich dagegen eine zu überwachende Fläche gleichmäßig erwärmt, beispielsweise aufgrund von Sonneneinstrahlung, heben sich die Ausgangssignale der pyroelektrischen Zellen gegenseitig auf, so daß insoweit Fehlerfassungen verringert werden.

Zusätzlich zum Widerstand 6 zwischen Versorgungsspannung $U_B$ und FET 3 kann an der Ausgangsklemme ein als Tiefpaß wirkender Kondensator 5 vorgesehen sein, der zusätzlich hochfrequente Störungen ausfiltert. Der Kondensator 5 wird üblicherweise zwischen Ausgangsklemme 7 und Masse geschaltet. Die Parallelschaltung aus pyroelektrischen Zellen 2 und Entladewiderstand 4 liegt üblicherweise zwischen Gate des FET 3 und Masse.

Die gesamte Schaltung kann in einem TO-5-Gehäuse untergebracht sein. Nach außen treten dann lediglich die Anschlüsse für die Versorgungsspannung, für Masse und für das Nutzsignal in Erscheinung. Außerdem weist das Gehäuse ein Fenster auf, durch das hindurch die pyroelektrischen Zellen die zu erfassende Wärmestrahlung empfangen.

Die pyroelektrischen Zellen hat eine Empfindlichkeit in der Größenordnung von etwa 3,5 kV/W, bei 0,5 µW ergibt sich demnach eine Spannung von weniger als 2 mV bei hohem Innenwiderstand. Der Widerstand 4 hat einen Wert zwischen 20 GΩ und 300 GΩ, vorzugsweise 75 GΩ. Die der erfindungsgemäßen Hochfrequenzunterdrückung dienende Impedanz 6 hat einen ohmschen Anteil zwischen 100 Ω und 470 kΩ, vorzugsweise 10 kΩ. Sie kann aber auch rein induktiv sein. Der FET 3 ist üblicherweise ein n-Kanal-Sperrschicht-FET, es können aber beispielsweise auch n-Kanal-Depletion-MOSFET verwendet werden. Der Kondensator 5 hat eine Kapazität im Bereich zwischen 100 pF und 10 nF, vorzugsweise von 270 pF. Der FET hat üblicherweise eine Spannungsverstärkung kleiner als 1, typischerweise etwa 0,9.

Das an der Ausgangsklemme 7 anliegende Signal kann dann durch geeignete nachfolgende Schaltungen, beispielsweise Operationsverstärker, weiterverarbeitet werden. Der weiter oben erwähnte Sourcewiderstand wäre ein Teil einer solchen externen Beschaltung.

**Patentansprüche**

1. Schaltung zur Erfassung elektromagnetischer Strahlung, mit

   - einem oder mehreren Sensorelementen (2), die auf sie auftreffende elektromagnetische Strahlung in ein elektrisches Signal umwandeln, und
   - einem Feldeffekttransistor (3), der das elektrische Signal des Sensorelements (2) empfängt,

   **dadurch gekennzeichnet, daß**
   der Feldeffekttransistor (3) über eine ohmsche bzw. induktive Impedanz (6) mit der Versorgungsspannung verbunden ist.

2. Schaltung nach Anspruch 1,
   dadurch gekennzeichnet, daß
   ein erster Leistungsanschluß des FET (3) den Signalausgang (7) der Schaltung bildet, und daß ein zweiter Leistungsanschluß des FET (3) mit der Impedanz (6) verbunden ist.

3. Schaltung nach Anspruch 1 oder 2,
   dadurch gekennzeichnet, daß
   parallel zu den Sensorelementen (2) ein Widerstand (4) geschaltet ist.

4. Schaltung nach einem der Ansprüche 1 bis 3,
   dadurch gekennzeichnet, daß
   die Sensorelemente (2) zwischen Gate des Feldeffekttransistors (3) und Masse geschaltet sind.

5. Schaltung nach einem der Ansprüche 1 bis 4,
dadurch gekennzeichnet, daß
zwischen erstem Leistungsanschluß des Feldeffekttransistors (3) und Masse ein Kondensator (5)
geschaltet ist.

6. Schaltung nach einem der Ansprüche 1 bis 5,
dadurch gekennzeichnet, daß
die zu erfassende Strahlung Wärmestrahlung bzw.
Infrarotstrahlung ist.

7. Schaltung nach einem der Ansprüche 1 bis 6,
dadurch gekennzeichnet, daß
die Sensorelemente (2) pyroelektrische Zellen sind.

8. Schaltung nach Anspruch 7,
dadurch gekennzeichnet, daß
zwei pyroelektrische Zellen gegenpolig seriell oder
parallel zueinander geschaltet sind.

9. Schaltung nach einem der Ansprüche 1 bis 8,
dadurch gekennzeichnet, daß
die Schaltung (1) in einem TO-5-Gehäuse untergebracht ist.

10. Schaltung nach einem der Ansprüche 1 bis 9,
dadurch gekennzeichnet, daß
der Feldeffekttransistor (3) ein n-Kanal-Sperrschicht-FET ist.

11. Schaltung nach einem der Ansprüche 1 bis 10,
dadurch gekennzeichnet, daß
der Feldeffekttransistor (3) als Impedanzwandler
geschaltet ist.

12. Schaltung nach einem der Ansprüche 1 bis 11,
dadurch gekennzeichnet, daß
die Impedanz (6) ein ohmscher Widerstand, eine
Induktivität oder eine Kombination aus beiden ist.

# Fig.1

# Fig.2